# EUROPÄISCHE PATENTSCHRIFT

(11) **EP 0 580 063 B1**
(45) Veröffentlichungstag und Bekanntmachung des Hinweises auf die Patenterteilung: **04.06.1997**
(21) Anmeldenummer: 93111176.9
(22) Anmeldetag: 13.07.1993
(51) Int. Cl.: G01M 3/36

(54) **Verfahren und Vorrichtung zum Prüfen der Dichtigkeit von Folienbeuteln**
Method and device for testing the tightness of foil bags
Méthode et dispositif pour tester l'étanchéité des sachets en feuille

(30) Priorität: 20.07.1992 DE 4223793
(43) Veröffentlichungstag der Anmeldung: 26.01.1994
(73) Patentinhaber: Focke & Co. (GmbH & Co.), D-27283 Verden (DE)
(72) Erfinder: Focke, Heinz, D-27283 Verden (DE)
(74) Vertreter: Bolte, Erich, Dipl.-Ing.

(56) Entgegenhaltungen:
- DE-A- 2 939 882
- DE-A- 3 716 095
- GB-A- 2 162 648
- US-A- 4 955 226
- PATENT ABSTRACTS OF JAPAN vol. 15, no. 129 (M-1098) 28. März 1991 & JP-A-03 014 435 (TOKIHISA MASUDA) 23. Januar 1991

## Beschreibung

Die Erfindung betrifft ein Verfahren und eine Vorrichtung zum Prüfen der Dichtigkeit von Folienbeuteln, insbesondere von Schüttgüter enthaltenden Schlauchbeuteln, bei denen das Füllgut den Innenraum des Folienbeutels nur teilweise ausfüllt, durch Prüforgane, die außen an den zu prüfenden Folienbeutel angesetzt werden und Druck auf den Folienbeutel übertragen, wobei die Prüforgane in einem Bereich außerhalb des Füllgutes am Folienbeutel wirksam werden.

Die Folienbeutel dienen zur Aufnahme von Schüttgütern unterschiedlichster Art, insbesondere auch von sogenannten Knabber-Artikeln, wir Kartoffel-Chips, Erdnüssen usw. Undichte Folienbeutel sollen identifiziert und vom weiteren Verpackungsprozess ausgeschlossen werden. Ein Prüfverfahren bzw. eine Prüfvorrichtung der eingangs genannten Art ist aus der US 4 955 226 bekannt. Während des Prüfvorgangs liegen die Beutel in einer stark geneigten Position auf einem Förderband auf. Prüforgane wirken schräg seitlich insbesondere auf einen unteren Bereich des Beutels ein. Die Gefahr der Schädigung des Inhalts ist nicht ausgeschlossen.

Der Erfindung liegt die Aufgabe zugrunde, ein Prüfverfahren und eine Prüfvorrichtung vorzuschlagen, durch die einerseits eine zuverlässige Prüfung der Dichtigkeit der Folienbeutel in kurzer Zeit möglich ist, andererseits aber auch empfindliche Füllgüter, wie insbesondere Kartoffel-Chips, durch den Prüfvorgang nicht beeinträchtigt werden.

Zur Lösung dieser Aufgabe ist das erfindungsgemäße Verfahren dadurch gekennzeichnet, daß die Folienbeutel in aufrechter Position geprüft werden, derart, daß sich das Füllgut ausschließlich im unteren Bereich des Folienbeutels sammelt und oberhalb des Füllgutes ein freier Hohlraum im Folienbeutel entsteht und daß die Prüforgane im Bereich dieses oberen Hohlraums an Beutelwandungen wirksam werden.

Die Erfindung macht sich den Umstand zunutze, daß die in Betracht kommenden Folienbeutel nur teilweise gefüllt sind. Das Volumen des Füllguts ist kleiner als der Innenraum des Folienbeutels. Bei Durchführung der Dichtigkeitsprüfung in aufrechter Stellung der Folienbeutel sammelt sich das Füllgut im unteren Bereich, während im oberen Teil, nämlich oberhalb des Füllguts, ein Hohlraum entsteht. Dieser wird erfindungsgemäß für die Dichtigkeitsprüfung benutzt.

Zur Dichtigkeitsprüfung dienen erfindungsgemäß mechanische Prüforgane, die unter einem vorgegebenen Prüfdruck an einander gegenüberliegenden Seiten des Folienbeutels im Bereich des Hohlraums wirksam werden, nämlich einen Prüfdruck auf den Folienbeutel ausüben. Die Eindrücktiefe des Prüforgans und/oder der gemessene Druckwiderstand des Folienbeutels ist ein Indikator für die Dichtigkeit desselben. Bei undichten Folienbeuteln entweicht die Luft in Folge der Druckbeaufschlagung durch das Prüforgan.

Ein weiteres wichtiges Merkmal der Erfindung besteht darin, daß der für die Dichtigkeitsprüfung zur Verfügung stehende Hohlraum des Folienbeutels verkleinert wird, so daß in einem so gebildeten Resthohlraum ein erhöhter Druck gegeben ist. Zur Verkleinerung des Hohlraums wird ein Teilbereich desselben durch Klemmorgane zusammengedrückt. Diese werden vorzugsweise seitlich wirksam, so daß der Resthohlraum für die Prüfzwecke ebenfalls im seitliche Bereich des Folienbeutels entsteht.

Vorteilhafterweise wird die vorstehend beschriebene Prüfung der Folienbeutel über einen längeren Zeitraum durchgeführt, insbesondere während einer längeren Förderstrecke. Dadurch können auch kleine Undichtigkeiten mit entsprechend geringem Luftaustritt ermittelt werden.

Die Prüfung wird erfindungsgemäß bei aufrechtem, vorzugsweise kontinuierlichen Transport der Folienbeutel durchgeführt. Besonders vorteilhaft ist ein Prüfkarussell, an dessen Außenumfang Taschen oder andere Aufnahmen für die Folienbeutel angeordnet sind. Jede Tasche ist mit Prüf- und gegebenenfalls Klemmorganen ausgestattet, so daß die Prüfung während der Drehbewegung des Prüfkarussells durchgeführt werden kann.

Weitere Einzelheiten der Erfindung werden nachfolgend anhand von Ausführungsbeispielen näher erläutert. Es zeigt:
- Fig. 1: Eine Prüfvorrichtung gemäß einem Ausführungsbeispiel der Erfindung in stark vereinfachter Darstellung, in Seitenansicht,
- Fig. 2: eine Folienbeutel im Horizontalschnitt,
- Fig. 3: den Folienbeutel während der Vorbereitung zur Dichtigkeitsmessung, ebenfalls im Horizontalschnitt,
- Fig. 4: eine Darstellung des Folienbeutels während der Dichtigkeitsmessung,
- Fig. 5 und Fig. 6: fortschreitende Phasen bei der Dichtigkeitsprüfung eines (undichten) Folienbeutels,
- Fig. 7: eine weitere Ausführungsform der Vorrichtung im schematischen Grundriß.

Bei dem dargestellten Ausführungsbeispiel geht es um die Prüfung der Dichtigkeit von Folienbeuteln 10 in der Ausführung als Schlauchbeutel. Dieser Typ eines Folienbeutels 10 besteht aus einem Abschnitt einer schlauchförmig geformten Folie mit Längsnaht (nicht gezeigt). Ein Schlauchabschnitt bildet den Folienbeutel 10. Dieser ist oben und unten durch quergerichtete Siegel- oder Klebenähte verschlossen, nämlich durch eine Bodennaht 11 und eine Verschluß naht 12.

Ein so ausgebildeter Folienbeutel 10 wird im Bereich einer Schlauchbeutelmaschine 13 bekannter Ausführung hergestellt und gefüllt. Zu diesem Zweck wird üblicherweise eine Folienbahn um ein Füllrohr gelegt und durch Anbringen einer fortlaufenden Längsnaht zu einem Schlauch geformt. Über das Füllrohr wird das Füllgut in den mit der Bodennaht 11 versehenen Schlauch eingefüllt. Sodann wird der Folienbeutel 10 von dem Schlauch abgetrennt und zugleich die Verschlußnaht 12 angebracht.

Als Füllgut kommen Schüttgüter unterschiedlicher Art in Betracht, insbesondere sogenannte Knabber-Artikel, wie (Kartoffel-)Chips, Erdnüsse etc.

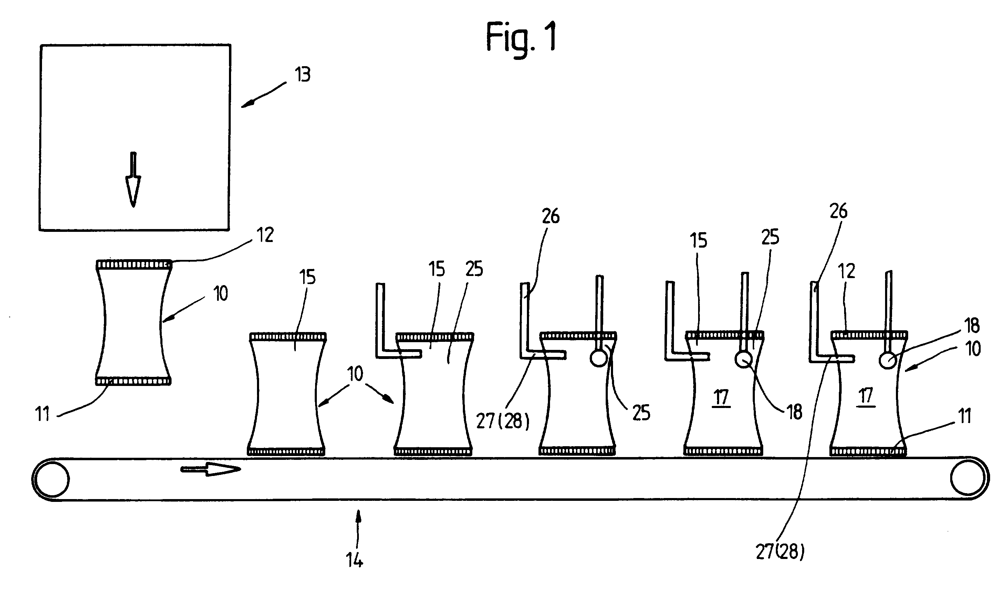

Vor der Verpackung der Folienbeutel 10 in Kartons ist deren Dichtigkeit zu überprüfen. Bei dem gezeigten Ausführungsbeispiel erfolgt die Prüfung unmittelbar im Anschluß an die Schlauchbeutelmaschine 13. Die unten aus dieser Schlauchbeutelmaschine 13 austretenden Folienbeutel 10 gelangen durch Abwärtsbewegung auf einen Endlosförderer, bei dem Ausführungsbeispiel gemäß Fig. 1 auf ein Förderband 14. Bei der Abwärtsbewegung der Folienbeutel 10 werden diese zweckmäßigerweise mindestens über einen Teilbereich der abwärtsgerichteten Förderstrecke im freien Fall bewegt. Durch das Auftreffen auf einer Unterlage, hier auf dem Förderband 14, wird sichergestellt, daß der Beutelinhalt im unteren Bereich des Folienbeutels 10 angesammelt ist. Da grundsätzlich bei diesem Verpackungstyp das Volumen des Füllguts kleiner ist als der gesamte Rauminhalt des Folienbeutels 10, entsteht im oberen Bereich des Beutels, nämlich oberhalb des auf der Bodennaht 11 ruhenden Füllguts, ein Hohlraum 15.

Die Folienbeutel 10 werden in aufrechter Stellung überprüft. Diese Dichtigkeitsprüfung wird durch (mechanische) Prüforgane durchgeführt, die in dem füllgutfreien Bereich, also im Bereich des Hohlraums 15, außen am Folienbeutel 10 wirksam werden. Dabei wird so vorgegangen, daß Prüforgane auf einander gegenüberliegende Beutelwandungen 16, 17 Druck ausüben. Das Prüfverfahren geht dabei aus von einer bestimmten Luft- bzw. Gasmenge in einem geschlossenen, dichten Folienbeutel 10. Ein Prüforgan wird mit einem bestimmten, vorgegebenen Prüfdruck gegen die Beutelwandung 16, 17 bewegt. Die Eindrücktiefe ist eine meßbare Größe für die Dichtigkeit des Folienbeutels. Die Prüforgane kommen ausschließlich im Bereich des Hohlraums 15 zur Wirkung, so daß das Füllgut durch den Prüfvorgang nicht belastet ist.

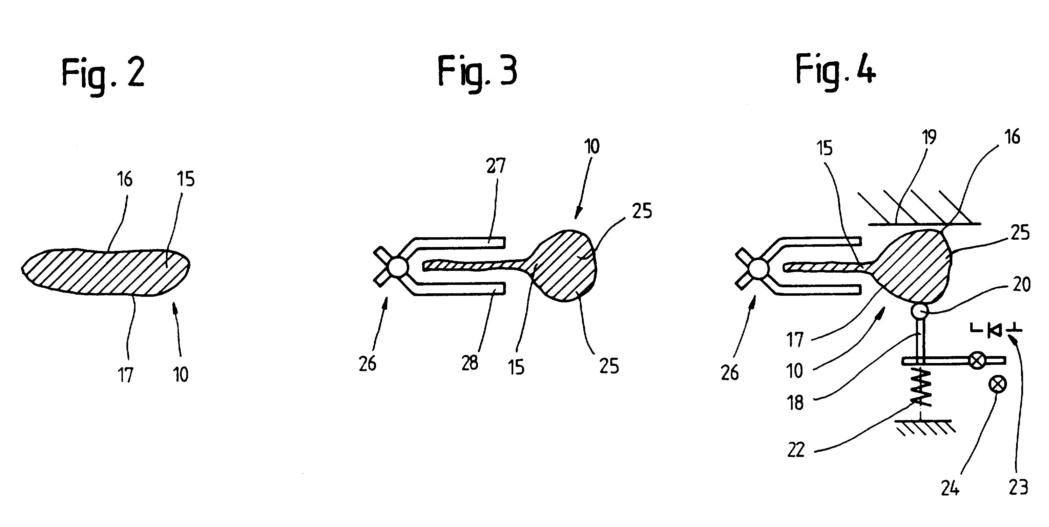

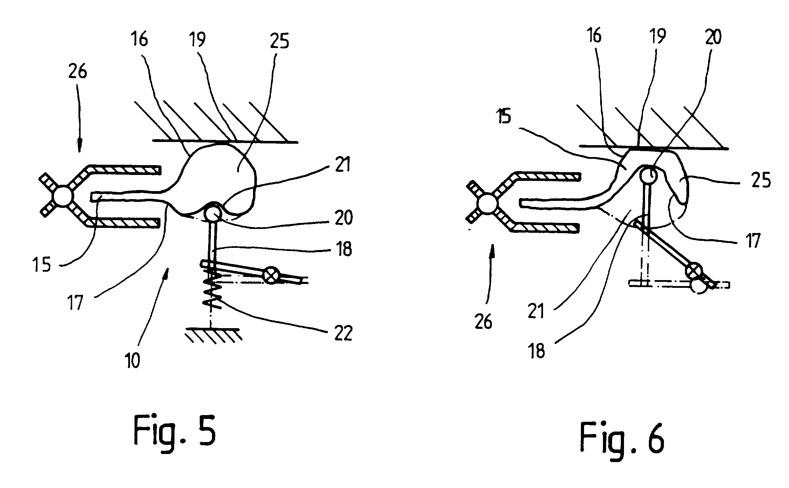

Bei dem vorliegenden Ausführungsbeispiel ist gemäß Fig. 4 bis Fig. 6 ein Prüfstößel 18 vorgesehen. Dieser wird auf der einen Seite des Folienbeutels 10 gegen die Beutelwandung 17 bewegt. Mit der gegenüberliegenden Seite, also der Beutelwandung 16, ist dabei der Folienbeutel 10 an einem Stützorgan, z.B. an einer festen Führungswand 19, abgestützt. Der Prüfstößel 18 ist mit einem abgerundeten Prüfkopf 20 versehen. Dieser bewirkt ein Eindrücken des Folienbeutels 10 im Bereich des Hohlraums 15. Es entsteht eine Vertiefung 21 bzw. Delle im Folienbeutel 10. Ist dieser undicht, entweicht die durch das Prüforgan einem höheren Druck ausgesetzte Luft bzw. das Gas im Inneren des Folienbeutels 10 über die Undichtigkeit. Der Prüfstößel 18 wird weiter in Prüfrichtung bewegt, so daß der Folienbeutel 10 schließlich deutlich zusammengedrückt wird (Fig. 6), da die Luft aus dem Folienbeutel 10 austritt. Diese Stellung des Prüforgans bewirkt ein Signal, welches zu einem Aussondern des fehlerhaften Folienbeutels 10 führt.

Das Prüforgan, also der Prüfstößel 18 ist einem bestimmten Prüfdruck ausgesetzt, der im vorliegenden Falle durch eine Feder 22 bestimmt ist. Dieser konstante, vorgegebene Prüfdruck ist auf den Innendruck im Folienbeutel 10 abgestimmt, derart, daß bei intaktem Folienbeutel 10 keine oder nur eine geringe Eindrücktiefe durch den Prüfkopf 20 bewirkt wird. In Fig. 5 und Fig. 6 ist jeweils die Stellung des Prüfstößels 18 bei fehlerfreiem Folienbeutel 10 gestrichelt dargestellt. Die Stellung des Prüfstößels bzw. des Prüfkopfes 20 kann dabei durch eine Lichtschranke mit entsprechenden optoelektrischen Sensoren 23, 24 festgestellt werden.

Eine weitere Besonderheit besteht darin, daß für die Durchführung der geschilderten Prüfung der über dem Füllgut gebildete Hohlraum 15 verkleinert wird. Das Gesamtvolumen der Luft innerhalb des Folienbeutels 10 wird dadurch auf einen geringeren Raum zusammengedrückt. Ein im Bereich des Hohlraums 15 gebildeter Resthohlraum 25 wird ballonartig, also prall gefüllt. In diesem Bereich, nämlich an den Beutelwandungen 16, 17 des ballonartigen Resthohlraums 25 kommen die Prüforgane (Prüfstößel 18) zur Wirkung.

Bei dem vorliegenden Ausführungsbeispiel wird ein Klemmorgan 26 im Bereich des Folienbeutels 10 an dessen Beutelwandungen 16, 17 angesetzt. Das Klemmorgan 26 wird im Bereich des Hohlraums 15 wirksam. Zwei Klemmbacken 27, 28 erfassen die Beutelwandungen 16, 17 an einander gegenüberliegenden Seiten und drücken einen Bereich des Hohlraums 15 flach zusammen. Dadurch wird der aufgeblähte Resthohlraum 25 in einem seitlichen, oberen Bereich des Folienbeutels 10 gebildet. Hier ist dann das Prüforgan wirksam.

Alternativ kann das Prüforgan auch so ausgebildet sein, daß ausschließlich durch Druckorgane, die im Bereich des Hohlraums 15, also oberhalb des Füllgutes, wirksam werden, die Dichtigkeit überprüft wird. Derartige Druckorgane müssen dann großflächig ausgebildet werden, so daß der Folienbeutel 10 im Bereich des Hohlraums 15 (nahezu) vollständig beaufschlagt ist. Auch dabei kann nach Maßgabe der Eindrücktiefe bzw. der Relativstellung der Druckorgane die Dichtigkeit überprüft werden.

Das vorliegende Prüfverfahren wird zweckmäßigerweise während des kontinuierlichen Transports der Folienbeutel 10 durchgeführt. Bei dem Ausführungsbeispiel gemäß Fig. 1 werden den Folienbeutel 10 während der Prüfung durch das Förderband 14 transportiert. Die Prüforgane laufen synchron mit den Folienbeuteln 10, ebenso wie die Klemmorgane. Nach Durchführung der Prüfung werden die intakten Folienbeutel 10 einer Verpackungsstation zugeführt.

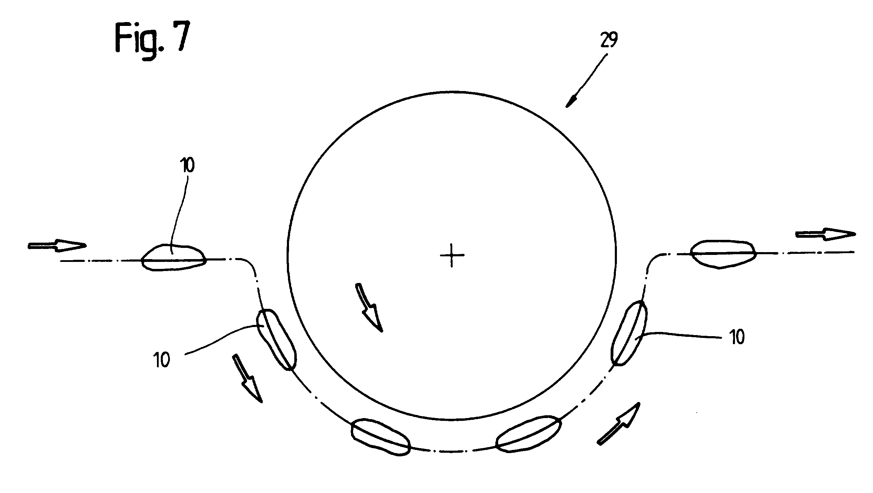

Fig. 7 zeigt eine Alternative. Bei dieser Ausführung werden die Folienbeutel nach dem Verlassen der Schlauchbeutelmaschine 13, z.B. durch ein Förderband, einem Prüfkarussell 29 zugeführt. Dieses ist ein um eine vertikale Achse (kontinuierlich) drehender Förderer mit Aufnahmen bzw. Taschen am Umfang. Jede Tasche nimmt einen Folienbeutel 10 auf. Des weiteren ist jede Tasche mit den Prüforganen und Klemmorganen ausgestattet, um die Prüfung während des Transports der Folienbeutel 10 durchzuführen. Bei dem gezeigten Beispiel werden die Folienbeutel 10 durch das Prüfkarussell 29 längs eines Halbkreises gefördert und dann an einen Abförderer zur Verpackungsstation übergeben. Im Bereich des Prüfkarussells 29 befinden sich die Folienbeutel 10 ebenfalls in aufrechter Stellung.

Das Prüfverfahren wird zweckmäßigerweise über einen längeren Zeitraum durchgeführt, bei der Ausführungsform gemäß Fig. 7 im Bereich des Prüfkarussells 29. Die Prüforgane (Prüfstößel 18) kommen dadurch während eines längeren Zeitraums zur Wirkung. Dadurch ist es möglich, auch Beutel mit kleinen Undichtigkeiten zu prüfen.

## Patentansprüche

1. Verfahren zum Prüfen der Dichtigkeit von Folienbeuteln (10), insbesondere von Schüttgüter enthaltenden Schlauchbeuteln, bei denen das Füllgut den Innenraum des Folienbeutels (10) nur teilweise ausfüllt, durch Prüforgane, die außen an den zu prüfenden Folienbeutel (10) angesetzt werden und Druck auf den Folienbeutel (10) übertragen, wobei die Prüforgane (18, 26) in einem Bereich außerhalb des Füllgutes am Folienbeutel (10) wirksam werden, **dadurch gekennzeichnet**, daß die Folienbeutel (10) in aufrechter Position geprüft werden, derart, daß sich das Füllgut ausschließlich im unteren Bereich des Folienbeutels (10) sammelt und oberhalb des Füllgutes ein freier Hohlraum (15) im Folienbeutel entsteht und daß die Prüforgane im Bereich dieses oberen Hohlraums (15) an Beutelwandungen (16, 17) wirksam werden.

2. Verfahren nach Anspruch 1, **dadurch gekennzeichnet**, daß zur Feststellung der Luftmenge im Folienbeutel (10) der freie Innenraum desselben verringert wird, insbesondere durch Zusammendrücken der Beutelwandungen (16, 17) im Bereich des Hohlraums (15) oberhalb des Füllguts, und daß auf der Grundlage des kleineren Volumens die Dichtigkeit gemessen wird.

3. Verfahren nach Anspruch 1 oder 2, dadurch gekennzeichnet, daß die Prüforgane über einen längeren Zeitraum, nämlich über eine längere, kontinuierliche Förderstrecke der Folienbeutel (10) an diesen wirksam werden, so daß auch bei kleinen Undichtigkeiten der Verlust an Luft feststellbar ist.

4. Verfahren nach einem oder mehreren der Ansprüche 1 bis 3, dadurch gekennzeichnet, daß die Prüforgane entlang einer horizontalen Förderstrecke wirksam werden.

5. Verfahren nach einem oder mehreren der Ansprüche 1 bis 4, dadurch gekennzeichnet, daß die Prüforgane, nämlich mindestens ein Prüfstößel (18), an der Außenseite der Beutelwandungen (16, 17) anliegen und die Dichtigkeit nach Maßgabe der Eindrücktiefe des Prüfstößels (18) ermittelt wird.

6. Vorrichtung zum Prüfen der Dichtigkeit von Folienbeuteln (10) und diese aufweisend, insbesondere zum Prüfen von Schüttgüter enthaltenden Folienbeuteln, durch Prüforgane, die außen an den zu prüfenden Folienbeutel (10) ansetzbar sind und Druck auf diesen außerhalb des Füllguts des nur teilweise mit Schüttgütern gefüllten Folienbeutels ausüben, dadurch gekennzeichnet, daß die Prüforgane (18, 16) im Bereich eines oberen Hohlraums (15) des in einer aufrechten Position gehaltenen Folienbeutels (10) auf diesen mit einem Prüfdruck einwirken.

7. Vorrichtung nach Anspruch 6, dadurch gekennzeichnet, daß der oberhalb des Füllguts gebildete Hohlraum (15) durch Zusammendrücken von Beutelwandungen (16, 17) im Bereich des Hohlraums (15) verkleinerbar ist, derart, daß ein kleinerer Resthohlraum (25) mit erhöhtem Innendruck entsteht und daß die Prüforgane, insbesondere Prüfstößel (18), im Bereich des Resthohlraums (25) an die Beutelwandungen (16, 17) ansetzbar sind.

8. Vorrichtung nach Anspruch 7, dadurch gekennzeichnet, daß der Hohlraum (15) durch in einem seitlichen Bereich des Folienbeutels (10) ansetzbare Klemmorgane (26) oder Klemmbacken (27, 28) reduzierbar ist.

9. Vorrichtung nach einem oder mehreren der Ansprüche 6 bis 8, dadurch gekennzeichnet, daß die Folienbeutel (10) zur Prüfung derselben in aufrechter Position durch ein Prüfkarussel (29), insbesondere mit vertikaler Drehachse, kontinuierlich transportierbar sind, wobei die Folienbeutel (10) in Taschen des Prüfkarussels (29) Aufnahme finden und jede Tasche mit Prüforganen und/oder Klemmorganen ausgerüstet ist.

## Claims

1. Method of testing the sealing of foil bags (10), in particular of tubular bags which contain bulk goods and in which the filling material only partially fills the interior of the foil bag (10), by means of testing elements which are placed on the outside of the foil bag (10) which is to be tested and exert pressure on the foil bag (10), the testing elements (18, 26) acting on the foil bag (10) in a region outside the filling material, characterized in that the foil bags (10) are tested in an upright position such that the filling material collects exclusively in the bottom region of the foil bag (10) and a free cavity (15) is produced in the foil bag above the filling material, and in that the testing elements act on bag walls (16, 17) in the region of this top cavity (15).

2. Method according to Claim 1, characterized in that, in order to determine the quantity of air in the foil bag (10), that part of the interior of the latter which is free is reduced, in particular by compressing the bag walls (16, 17) in the region of the cavity (15) above the filling material, and in that the sealing is measured on the basis of the smaller volume.

3. Method according to Claim 1 or 2, characterized in that the testing elements act on the foil bags (10) over a relatively long period of time, namely over a relatively long, continuous conveying path of said bags, with the result that the loss of air can be detected even in the case of small unsealed sections.

4. Method according to one or more of Claims 1 to 3, characterized in that the testing elements act along a horizontal conveying path.

5. Method according to one or more of Claims 1 to 4, characterized in that the testing elements, namely at least one testing ram (18), rest against the outside of the bag walls (16, 17) and the sealing is determined in accordance with the push-in depth of the testing ram (18).

6. Apparatus for testing the sealing of foil bags (10), in particular for testing foil bags which contain bulk goods, by means of testing elements which can be placed on the outside of the foil bag (10) which is to be tested and exert pressure thereon outside the filling material of the foil bag, which is only partially filled with bulk goods, characterized in that the testing elements (18, 16) exert a testing pressure on the foil bag (10) in the region of a top cavity (15) of said foil bag, which is retained in an upright position.

7. Apparatus according to Claim 6, characterized in that the cavity (15) formed above the filling material can be reduced by compressing bag walls (16, 17) in the region of the cavity (15), such that a smaller, residual cavity (25) with increased internal pressure is produced, and in that the testing elements, in particular testing rams (18), can be placed on the bag walls (16, 17) in the region of the residual cavity (25).

8. Apparatus according to Claim 7, characterized in that the cavity (15) can be reduced by clamping elements (26) or clamping jaws (27, 28) which can be placed in a lateral region of the foil bag (10).

9. Apparatus according to one or more of Claims 6 to 8, characterized in that, in order to test the foil bags (10), the latter can be transported continuously, in an upright position, through a testing turret (29), in particular with a vertical axis of rotation, the foil bags (10) being received in pockets of the testing turret (29), and each pocket being equipped with testing elements and/or clamping elements.

## Revendications

1. Procédé de contrôle de l'étanchéité de sachets en feuille (10), en particulier de sachets en tuyau contenant des produits en vrac, pour lesquels le produit de remplissage ne remplit que partiellement l'espace intérieur du sachet en feuille (10), au moyen d'organes de vérification qui sont appliqués extérieurement sur les sachets en feuille (10) à vérifier et transmettent de la pression au sachet en feuille (10), les organes de vérification (18, 26) agissant sur le sachet en feuille (10), dans une zone située à l'extérieur du produit de remplissage, caractérisé par le fait que les sachets en feuille (10) sont vérifiés en position dressée, que le produit de remplissage est collecté exclusivement dans la zone inférieure du sachet en feuille (10) et un espace creux (15) libre se constituant dans le sachet en feuille, au-dessus du produit de remplissage, et que les organes de contrôle agissent sur les parois de sachet (16, 17), dans la zone de cet espace creux supérieur (15).

2. Procédé selon la revendication 1, caractérisé par le fait que, pour déterminer la quantité d'air se trouvant dans le sachet en feuille (10), on diminue l'espace intérieur libre de celui-ci, en particulier par une compression des parois de sachet (16, 17) dans la zone de l'espace creux (15), au-dessus du produit de remplissage, et que l'étanchéité est mesurée dans la position de base du petit volume.

3. Procédé selon la revendication 1 ou 2, caractérisé par le fait que les organes de contrôle agissent sur un intervalle de temps long, précisément sur la distance d'un long parcours de transport continu des sachets en feuille (10), sur ceux-ci, de manière que la perte d'air puisse être déterminée également lorsque l'on a affaire à de petits défauts d'étanchéité.

4. Procédé selon l'une ou plusieurs des revendications 1 à 3, caractérisé par le fait que les organes de contrôle agissent le long d'une distance de transport horizontale.

5. Procédé selon l'une des revendications 1 à 4, caractérisé par le fait que les organes de contrôle, précisément au moins un poussoir de contrôle (18), appuient sur la face extérieure des parois de sachet (16, 17), et l'étanchéité est déterminée selon la valeur de la profondeur d'enfoncement du poussoir de contrôle (18).

6. Dispositif de contrôle de l'étanchéité de sachets en feuille (10) et, en présentant ceux-ci, en particulier pour le contrôle de sachets en feuille contenant des produits en vrac, au moyen d'organes de contrôle, pouvant être appliqués extérieurement sur les sachets en feuille (10) à contrôler et exerçant une pression sur ceux-ci, à l'extérieur du produit de remplissage du sachet en feuille qui n'est rempli que partiellement par des produits en vrac, caractérisé par le fait que les organes de contrôle (18, 16) agissent dans la zone d'un espace creux supérieur (15) du sachet en feuille (10) maintenu dans la position dressée, sur cet espace creux supérieur, avec une pression de contrôle.

7. Dispositif selon la revendication 6, caractérisé par le fait que l'espace creux (15), constitué au-dessus du produit en vrac, est susceptible d'être diminué par compression des parois de sachet (16, 17) dans la zone de l'espace creux (15), de manière à ce que soit constitué un espace creux résiduel (25) plus petit, dans lequel la pression intérieure est augmentée, et que les organes de contrôle, en particulier les poussoirs de contrôle (18), sont susceptibles d'être appliqués sur les parois de sachet (16, 17) dans la zone de l'espace creux résiduel (25).

8. Dispositif selon la revendication 7, caractérisé par le fait que l'espace creux (15) peut être réduit au moyen d'organes de serrage (26) ou de mâchoires de serrage (27, 28), qui sont susceptibles d'être appliqués dans une zone latérale du sachet en feuille (10).

9. Dispositif selon l'une ou plusieurs des revendications 6 à 8, caractérisé par le fait que les sachets en feuille (10) sont susceptibles d'être transportés en continu pour effectuer leur contrôle, en étant placés dans une position dressée, au moyen d'un carrousel de contrôle (29), en particulier ayant un axe de rotation vertical, les sachets en feuille (10) étant logés dans des poches du carrousel de contrôle (29), et chaque poche étant équipée d'organes de contrôle et/ou d'organes de serrage.
